# EUROPEAN PATENT SPECIFICATION

(11) **EP 1 131 575 B1**
(45) Date of publication and mention of the grant of the patent: **04.02.2004**
(21) Application number: 99953739.2
(22) Date of filing: 10.11.1999
(51) Int. Cl.: F16K 1/52, F16K 47/02

(54) **VALVE**
VENTIL
SOUPAPE

(30) Priority: 18.11.1998 DE 19853118
(43) Date of publication of application: 12.09.2001
(73) Proprietor: Danfoss A/S, 6430 Nordborg (DK)
(72) Inventor: MICHELSEN, Kenneth, DK-8000 Aarhus (DK)
(86) International application number: PCT/DK1999/000614
(87) International publication number: WO 2000/029771

(56) References cited:
- DE-A- 1 475 918
- DE-A1- 3 306 608
- DE-A1- 4 402 752
- US-A- 3 120 373
- US-A- 5 312 085

## Description

The invention relates to a valve according to the preamble of claim 1.

Valves should operate with as little noise as possible. That is true especially of radiator valves. Even though radiator valves are not subject to cavitation noises but only to flow noises, flow noises are further amplified by the radiator, especially when the valves are mounted close to or directly in the radiator. A similar effect occurs in the case of refrigeration valves and other regulating valves.

In a valve of the kind mentioned at the beginning in the form of a radiator valve (DE 44 02 752 A1), a reduction in noise was obtained by diverting the heating water twice or more than twice after it had left the throttle point. That was accomplished by arranging the outflow space, defined by radial outflow openings, in the immediate proximity of the valve seat or underneath the valve seat. As a result of the diversions, a very large amount of energy was removed from the heating water. Turbulence and noises associated therewith were very significantly reduced.

The problem underlying the invention is to obtain a new kind of noise reduction for a valve of the kind mentioned at the beginning.

The problem is solved according to the invention by a valve having the features of claim 1.

A channel having a cross-section that enlarges in the direction of flow is arranged between the throttle print and the outlet space.

In this construction, the speed of the fluid, especially water, flowing through the channel, is necessarily reduced, with the high flow speed already dropping off just a short distance after the throttle point. Because a high flow speed is a major factor in the generation of noise, a very significant noise reduction occurs as a result.

The enlargement in cross-section preferably occurs steplessly or substantially steplessly. The flow speed is then reduced in a highly continuous manner, which again prevents noise.

According to the invention the channel is bounded by an outer wall region following the seat and an inner wall region following the closure element, at least one of which regions is inclined with respect to the axis. By selecting the wall regions it is possible to obtain a channel that has an optimal cross-section.

In the simplest case, the inclined wall region has a conical shape. The flow speed then decreases according to a quadratic function.

An alternative, which is likewise advantageous, provides for the inclined wall region to be increasingly inclined with respect to the axis in the direction of flow, as a result of which the flow speed can be reduced even further.

According to the invention provision is made for the outer wall region to follow the outside of the valve seat and for the inner wall region to be formed by a shaped member connected to the closure element. It is possible to use the shaped member to obtain any desired channel boundary.

It is advantageous for the closure element to be a plate, on the rear of which the shaped member is arranged.

Another preferred possibility is for the closure element to be a sealing ring carried by the shaped member.

It is often desirable here for the shaped member to be made of plastics. The shaped member can therefore be a mass-produced article which is injection-moulded or manufactured by other means.

It is also advantageous for the outer wall region to follow the inside of the valve seat and for the inner wall region to be formed by the valve stem. In that case, the valve stem passes through the valve seat. Such a valve is suitable as a refrigeration valve.

A simplification is achieved in terms of construction when a one-piece component surrounds the inflow region, carries the valve seat and forms the outer wall region of the channel. The structural unit so formed can be connected to the rest of the valve housing, for example by flanging over.

In a preferred development, the one-piece component also surrounds the outflow space, extends beyond it and there has an attachment region for attachment to further valve components. The one-piece component fulfils a large number of functions and is easy to attach to other valve components at the attachment region, for example by means of a screw thread or an adhesive connection.

The valve is preferably in the form of an insert for mounting in a radiator, which is possible without further complications because of the good noise suppression. A reduction in noise of from 5 to 6 dBa is achieved compared with commercially available radiator valves. Despite the immediate proximity to the radiator surfaces there is, therefore, no risk that disruptive noises will occur as a result of amplification effects.

According to the invention the outflow space is surrounded by a sleeve having outflow openings, the size of which can be adjusted by rotation of the sleeve. Because that pre-setting sleeve is located in the outflow space, it does not interfere with the channel provided in accordance with the invention.

Results have proved to be especially good when the spacing between the valve seat and the outflow opening is at least twice the maximum valve lift.

A further noise reduction is achieved when the valve seat and/or closure element and/or wall portions have rounded edges and corners.

The invention is described below in greater detail with reference to preferred exemplary embodiments illustrated in the drawing, in which:
- Fig. 1: shows a partial longitudinal section through the insert of a radiator valve according to the invention;
- Figs. 2 to 4: show longitudinal sections through the region of the throttle point in further exemplary embodiments; and
- Figs. 5 and 6: shows a longitudinal section through the region of the throttle point in valves that are not part of the invention.

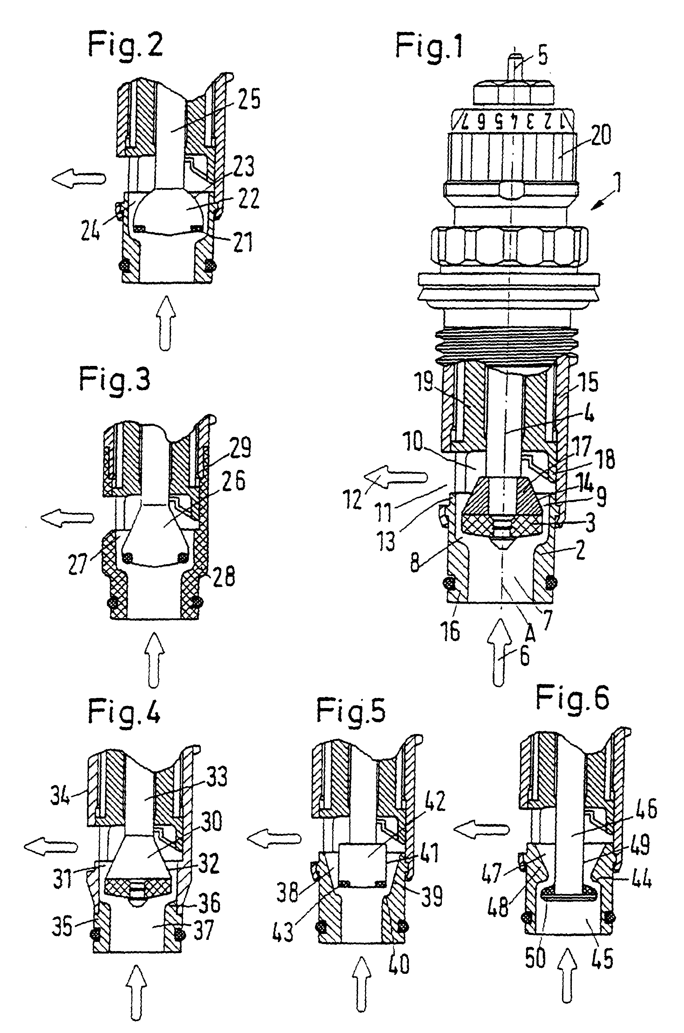

The insert illustrated in Fig. 1 is, as is generally customary, intended for mounting in a radiator (see DE 44 02 752 A1). There is provided a valve seat 2, which innermost has a rounded edge and outermost a rounded corner. The valve seat 2 co-operates with a closure element 3, which can be moved in the direction of arrow A by a pin 5 by way of a valve stem 4. Heating water flows in the direction of the arrow 6 into an axial inflow region 7, flows through the throttle point 8 between the valve seat 2 and the closure element 3 and reaches, by way of a channel 9 extending beyond the closure element 3, an outflow space 10, which is defined by a peripherally arranged outflow opening 11, so that the heating water is diverted radially in the outflow space 10 and flows out in the direction of the arrow 12.

That region of the channel 9 which is located beyond the closure element is bounded by a cylindrical outer wall region 13 and a conical inner wall region 14, so that the channel 9 has an annular cross-section that enlarges continuously in the direction of flow, as a result of which the flow speed and, therefore, the generation of noise, is greatly reduced.

The insert 1 has a housing 15, the bottom end of which is connected, by flanging over, to a component 16, which comprises the inflow region 7, the valve seat 2 and the cylindrical outer wall region 13 of the channel 9. The conical wall region is formed by a shaped member 17, which is made of plastics but can also be made of other materials such as brass and which is arranged on the rear of the plate-like closure element 3.

In the insert housing 15 there is arranged a pre-setting sleeve 18, which has one or more openings in a manner known per se, making it possible, in conjunction with the outflow opening 11 in the housing 15, to change the outflow cross-section. For that purpose, the sleeve 18 is connected to a setting knob 20 by way of a driver element 19.

The spacing between the valve seat 2 and the outflow opening 10 is dimensioned so that, even at maximum lift of the closure element 3, a portion of the channel 9 remains effective. The spacing should, therefore, preferably be at least twice the maximum valve lift.

In the exemplary embodiment of Fig. 2, the closure element 21 is in the form of a sealing ring, which is carried by a shaped member 22. The shaped member forms the approximately paraboloid-shaped inner wall region 23 of the channel 24. The shaped member 22 is, furthermore, constructed integrally with the valve shaft 25. All the other components of the valve of Fig. 2 are the same as in Fig. 1.

The embodiment of Fig. 3 differs from that of Fig. 2 in that the shaped member 26, which also carries a closure element in the form of a sealing ring, has a conical shape, resulting in a flared wall region for bounding the channel 27. A one-piece component 28 surrounds the inflow region, carries the valve seat and forms the outer wall region of the channel 27. It also surrounds the outflow space and extends beyond the outflow space to an attachment region 29 for attachment to other valve components. That attachment region 29 can be in the form of a screw thread, adhesion region or the like.

The embodiment of Fig. 4 differs from that of Fig. 1 in that the shaped member 30, which bounds the channel 31 by means of a conical wall region 32, is constructed integrally with the valve shaft 33. Furthermore, the bottom of the housing 34 terminates in an insert constituting the valve seat 36 and the inflow channel 37.

In Fig. 5, which is not part of the invention, the channel 38 is bounded by a conical outer wall region 39 following the valve seat 40 and by an inner cylindrical wall region 41 on a shaped member 42, which also carries the annular closure element 43.

In Fig. 6, which is not part of the invention, the valve seat 44 faces towards the inflow region 45 and the valve stem 46 passes through the valve seat 44. A channel 47 is bounded by an outer wall region 48, which follows the inside of the valve seat 44, and by a cylindrical inner wall region 49 formed by the valve shaft 46. Again, the closure element 50 is in the form of a plate.

In all cases, the speed of the heating water accelerated at the throttle point 8 is reduced again in the channel (9 in Fig. 1) following on therefrom, so that the heating water, which flows out after being diverted, does not produce any disruptive noises.

## Claims

1. Valve for a radiator with a housing, having an axial inflow region and a valve seat, forming, together with a closure element movable along an axis, a throttle point, and having on its circumference an outflow opening, which effects a radial diversion forming an outflow space, said outflow space being surrounded by a sleeve, having, on rotation of the sleeve, outflow openings with adjustable sizes, **characterized in that** between the throttle point (8) and the outflow space (10) there is arranged a channel (9; 24; 28; 31; 38; 47) having a cross-section that enlarges in the direction of flow and that the channel is bounded by an outer, cylindrical wall region (13) following the seat (2; 36) and by an inner wall region (14; 23; 32) following the closure element (3; 27), said inner wall region being inclined in the flow direction with respect to the axis (A) and being formed by a shaped member (17; 22; 26; 30) being connected with the closure element (3).

2. Valve according to claim 1, **characterized in that** the inclined wall region (14; 32) has a conical shape.

3. Valve according to claim 1, **characterized in that** the inclined wall region (23) is increasingly inclined with respect to the axis (A) in the direction of flow.

4. Valve according to one of the claims 1 to 3, **characterized in that** the closure element (3) is a plate, on the rear of which the shaped member (17, 30) is arranged.

5. Valve according to one of the claims 1 to 3, **characterized in that** the closure element (21) is a sealing ring carried by the shaped member (22; 26).

6. Valve according to one of claims 1 to 5, **characterized in that** the shaped member (17; 22; 26; 30) is made of plastics.

7. Valve according to one of claims 1 to 6, **characterized in that** a one-piece component (16; 28) surrounds the inflow region (7), carries the valve seat (2) and forms the outer wall region (13) of the channel (9).

8. Valve according to claim 7, **characterized in that** the one-piece component (28) also surrounds the outflow space, extends beyond it and there has an attachment region (29) for attachment to other valve parts.

9. Valve according to one of claims 1 to 8, **characterized in that** the spacing between the valve seat (2) and the outflow opening (10) is at least twice the maximum valve lift.

10. Valve according to one of claims 1 to 9, **characterized in that** the valve seat (2) and/or closure element and/or wall portions have rounded edges and corners.

## Patentansprüche

1. Heizkörperventil mit einem Gehäuse, das einen axialen Zustromabschnitt und ein Ventilsitz, die gemeinsam mit einem längs einer Achse verstellbaren Verschlußstück eine Drosselstelle bilden, und an seinem Umfang eine Abströmöffnung aufweist, die eine einen Abströmraum bildende radiale Umlenkung bewirkt, wobei der Abströmraum von einer Hülse umgeben ist, die durch Drehung der Hülse in ihrer Größe verstellbare Abströmöffnungen aufweist, **dadurch gekennzeichnet, daß** zwischen Drosselstelle (8) und Abströmraum (10) ein Kanal (9; 24; 27; 31; 38; 47) mit sich in Strömungsrichtung vergrößerndem Querschnitt angeordnet ist, und daß der Kanal durch einen an den Sitz (2; 36) anschließenden äußeren, zylindrischen Wandabschnitt (13; 39; 48) und einen an das Verschlußstück (3; 27) anschließenden inneren Wandabschnitt (14; 23; 32) umgeben ist, wobei der innere Wandabschnitt in Strömungsrichtung zur Achse (A) geneigt ist und durch einen Formkörper (17; 22; 26; 30) gebildet ist, die mit dem Verschlußstück (3) verbunden ist.

2. Ventil nach Anspruch 1, **dadurch gekennzeichnet, daß** der geneigte Wandabschnitt (14; 32) Konusform hat.

3. Ventil nach Anspruch 1, **dadurch gekennzeichnet, daß** der geneigte Wandabschnitt (23) eine in Strömungsrichtung zunehmende Neigung zur Achse (A) hat.

4. Ventil nach einem der Ansprüche 1-3, **dadurch gekennzeichnet, daß** das Verschlußstück (3) ein Teller ist, an dessen Rückseite der Formkörper (17, 30) angeordnet ist.

5. Ventil nach einem der Ansprüche 1-3, **dadurch gekennzeichnet, daß** das Verschlußstück (21) ein Dichtring ist, der vom Formkörper (22; 26) getragen wird.

6. Ventil nach einem der Ansprüche 1-5, **dadurch gekennzeichnet, daß** der Formkörper (17; 22; 26; 30) aus Kunststoff besteht.

7. Ventil nach einem der Ansprüche 1-6, **dadurch gekennzeichnet, daß** ein einstückiges Bauteil (16; 28) den Zuströmabschnitt (7) umgibt, den Ventilsitz (2) trägt und den äußeren Wandabschnitt (13) des Kanals (9) bildet.

8. Ventil nach Anspruch 7, **dadurch gekennzeichnet, daß** das einstückige Bauteil (28) auch den Abströmraum umgibt, über ihn hinausragt und dort eine Befestigungsstelle (29) zur Anbringung an weiteren Ventilteilen aufweist.

9. Ventil nach einem der Ansprüche 1-8, **dadurch gekennzeichnet, daß** der Abstand zwischen dem Ventilsitz (2) und der Abströmöffnung (10) mindestens doppelt so groß ist wie der maximale Ventilhub.

10. Ventil nach einem der Ansprüche 1-9, **dadurch gekennzeichnet, daß** Ventilsitz (2) und/oder Verschlußstück (50) und/oder Wandteile gerundete Kanten und Ecken aufweisen.

## Revendications

1. Soupape pour radiateur avec un logement ayant une zone d'entrée axiale et un siège de soupape formant, conjointement avec un élément de fermeture mobile le long d'un axe, un point d'étranglement et présentant sur sa circonférence une ouverture de sortie, qui effectue une diversion radiale formant un espace de sortie, ledit espace de sortie étant entouré d'une enveloppe, ayant, lors de la rotation de l'enveloppe, des ouvertures de sortie de dimensions réglables,
**caractérisée en ce qu'**entre le point d'étranglement (8) et l'espace de sortie (10) est agencé un canal (9;24;28;31;38;47) ayant une section transversale qui s'agrandit dans la direction de l'écoulement et **en ce que** le canal est délimité par une zone de paroi cylindrique extérieure (13) suivant le siège (2;36) et par une zone de paroi intérieure (14;23;32) suivant l'élément de fermeture (3;27), ladite zone de paroi interne étant inclinée dans la direction d'écoulement par rapport à l'axe (A) et étant formée par un élément profilé (17;22;26;30) raccordé à l'élément de fermeture (3).

2. Soupape selon la revendication 1, **caractérisée en ce que** la zone de paroi inclinée (14;32) présente une forme conique.

3. Soupape selon la revendication 1, **caractérisée en ce que** la zone de paroi inclinée (23) est inclinée de façon croissante par rapport à l'axe (A) dans la direction de l'écoulement.

4. Soupape selon l'une des revendications 1 à 3, **caractérisée en ce que** l'élément de fermeture (3) est une plaque, sur l'arrière de laquelle est agencé l'élément profilé (17,30).

5. Soupape selon l'une des revendications 1 à 3, **caractérisée en ce que** l'élément de fermeture (21) est une bague d'étanchéité portée par l'élément profilé (22;26).

6. Soupape selon l'une des revendications 1 à 5, **caractérisée en ce que** l'élément profilé (17;22;26;30) est réalisé en plastique.

7. Soupape selon l'une des revendications 1 à 6, **caractérisée en ce qu'**un composant d'un seul tenant (16;28) entoure la zone d'entrée (7), porte le siège de soupape (2) et forme la zone de paroi externe (13) du canal (9).

8. Soupape selon la revendication 7, **caractérisée en ce que** le composant d'un seul tenant (28) entoure également l'espace de sortie, s'étend au-delà de celui-ci et là possède une zone de fixation (29) pour la fixation sur d'autres parties de soupape.

9. Soupape selon l'une des revendications 1 à 8, **caractérisée en ce que** l'espacement entre le siège de soupape (2) et l'ouverture de sortie (10) est égal à au moins deux fois la course maximale de levée de soupape.

10. Soupape selon l'une des revendication 1 à 9, **caractérisée en ce que** le siège de soupape (2) et/ou l'élément de fermeture et/ou les portions de paroi ont des coins et des bords arrondis.
